# EUROPÄISCHE PATENTSCHRIFT

(11) **EP 3 787 824 B1**
(45) Veröffentlichungstag und Bekanntmachung des Hinweises auf die Patenterteilung: **11.02.2026**
(21) Anmeldenummer: 19721609.6
(22) Anmeldetag: 02.05.2019
(51) Int. Cl.: B23B 49/00, B23B 51/10

(54) **ZERSPANUNGSWERKZEUG MIT TIEFENANSCHLAG**
CUTTING TOOL HAVING A DEPTH STOP
OUTIL D'USINAGE PAR ENLÈVEMENT DE COPEAUX À BUTÉE DE PROFONDEUR

(30) Priorität: 04.05.2018 DE 102018206889
(43) Veröffentlichungstag der Anmeldung: 10.03.2021
(73) Patentinhaber: Gühring Kg, 72458 Albstadt (DE)
(72) Erfinder: REBHOLZ, Felix, 72510 Frohnstetten (DE); V. PUTTKAMER, Ingo, 72458 Albstadt (DE)
(74) Vertreter: Winter, Brandl - Partnerschaft mbB
(86) Internationale Anmeldenummer: PCT/EP2019/061217
(87) Internationale Veröffentlichungsnummer: WO 2019/211364

(56) Entgegenhaltungen:
- WO-A1-2007/071757
- CH-A- 464 649
- DE-C- 729 215
- US-A- 2 422 279
- US-A- 3 241 405

## Beschreibung

Die Erfindung betrifft ein Zerspanungswerkzeug mit einem die Eindringtiefe in ein Werkstück begrenzenden Tiefenanschlag.

Die DE 102014115768 B3 offenbart ein drehangetriebenes Zerspanungswerkzeug, im Besonderen ein Bohr-, Fräs- oder Senkwerkzeug, mit einem Tiefenanschlag, der die Eindringtiefe des Zerspanungswerkzeug in ein Werkstück begrenzt. Der Tiefenanschlag weist im Besonderen eine über zwei Drehlager drehbeweglich getragene Anschlaghülse auf. Die beiden Drehlager sitzen in einem axialen Abstand zueinander auf einer Schafthülse. Die Schafthülse ist auf dem Schaft des Zerspanungswerkzeugs fixierbar.

In einer in der Druckschrift gezeigten Ausführungsform sind die beiden Drehlager auf der Schafthülse axial jeweils durch an der Schafthülse fixierte Lagerringe festgelegt. Das zwangsläufige vorhandene axiale Lagerspiel, um das sich der Außenring jedes Drehlagers, der die Anschlaghülse trägt, gegenüber dem Innenring des betreffenden Drehlagers, der auf der Schafthülse sitzt, verschieben lässt, erschwert jedoch eine präzise Positionierung des Tiefenanschlags in axialer Richtung des Zerspanungswerkzeug, wodurch eine vorgegebene Solleindringtiefe nicht so ohne weiteres erreichbar ist. Bei einer Senkbearbeitung beispielsweise könnte die erzeugte Senkoberfläche daher höher oder tiefer liegen als unerwünscht. Häufig, z.B. bei der Herstellung von Senkbohrungen im Flugzeugbau, kommt es jedoch auf eine exakte Senktiefe bzw. Lagegenauigkeit der erzeugten Senkoberfläche an.

In einer anderen in der Druckschrift gezeigten Ausführungsform sind die beiden Drehlager zwischen einer auf die Schafthülse geschraubten Lagerspannmutter und einem Gegenlagerring an der Schafthülse verspannt. Über die Lagerspannmutter kann die Verspannung der beiden Drehlager, d.h. das Lagerspiel, eingestellt werden. Bei einer unsachgemäßen Montage oder einer unsachgemäßen Betätigung der Lagerspannmutter kann die auf die beiden Drehlager ausgeübte Spannkraft jedoch zu groß oder zu klein sein. Ist die Spannkraft zu groß, kann es zu einer Beschädigung oder zum Fressen der Drehlager kommen, während die Folge einer zu kleinen Spannkraft ein allzu großes Lagerspiel und eine unbestimmbare oder ungenaue Positionierung des Tiefenanschlags sein können.

Die Druckschrift DE 729 215 C offenbart ein Zerspanungswerkzeug gemäß dem Oberbegriff des Anspruchs 1. Die Druckschriften US 2 422 279, US 3 241 405 A, WO 2007/071757 A1 und CH 464 649 A offenbaren weitere Zerspanungswerkzeuge.

Der Erfindung liegt nun ausgehend von der DE 729 215 C die Aufgabe zugrunde, ein Zerspanungswerkzeug mit einem drehbeweglichen Tiefenanschlag zu schaffen, das eine einfache Lageeinstellung des Tiefenanschlags am Zerspanungswerkzeug ermöglicht.

Diese Aufgabe wird durch ein Zerspanungswerkzeug mit den Merkmalen des Anspruchs 1 gelöst. Vorteilhafte oder bevorzugte Ausführungsformen sind Gegenstand abhängiger Ansprüche.

Ein erfindungsgemäßes Zerspanungswerkzeug, z.B. ein Bohr-, Fräs- oder Senkwerkzeug, hat einen Schaft und einen an den Schaft anschließenden Schneidkopf. Der Schneidkopf kann ein- oder mehrschneidig ausgebildet sein und mit dem Schaft lösbar, z.B. form- und/oder kraftschlüssig, oder unlösbar, z.B. stoffschlüssig oder durch einstückige Fertigung, verbunden sein. Die lösbare Verbindung gestattet einen Austausch des Schneidkopfs z.B. bei Verschleiß. Die unlösbare Verbindung kann die Fertigung des Zerspanungswerkzeugs vereinfachen. Über den Schaft kann der Schneidkopf bzw. das Zerspanungswerkzeug an einer Werkzeugaufnahme oder dergleichen gehalten werden. Der Schaft trägt über wenigstens ein Drehlager, das im Besonderen aus einem Wälzlager, z.B. Kugellager, gebildet sein kann, einen die Eindringtiefe in ein Werkstück begrenzenden Tiefenanschlag. Um seiner Funktion gerecht zu werden, ist der Tiefenanschlag in axialer Richtung entgegensetzt zur Werkzeugvorschubrichtung an dem wenigstens einen Drehlager festgelegt. Erfindungsgemäß soll der Tiefenanschlag über das wenigstens eine Drehlager vom Schneidkopf weg gegen einen schaftseitigen Anschlag federvorgespannt sein. Durch die Federvorspannung wird daher eine Reduzierung eines axialen Lagerspiels in dem wenigstens einen Drehlager und/oder eines axialen Montagespiels zwischen dem Tiefenanschlag und dem wenigstens einen Drehlager erreicht, wodurch eine spielfreie und präzise Positionierung des Tiefenanschlags in axialer Richtung am Zerspanungswerkzeug ermöglicht ist.

Erfindungsgemäß ist das wenigstens eine Drehlager axial verschiebbar und der schaftseitige Anschlag aus einem axial verstellbaren Stellanschlag gebildet, wodurch es zudem möglich ist, die axiale Lage des federvorgespannten Tiefenanschlags relativ zum Schneidkopf einzustellen.

Eine einfache Lageeinstellung des Tiefenanschlags gelingt erfindungsgemäß dadurch, dass der schaftseitige Anschlag ein Stellanschlag ist, der aus einer auf dem Schaft lageeinstellbar angeordneten Buchse gebildet ist. Die axiale Lageeinstellung der den Stellanschlag bildenden Buchse kann durch Verschraubung oder Verschiebung erfolgen. Nach erfolgter Lageeinstellung kann die Buchse mittels einer Klemmschraube axial fixierbar sein. In einer bevorzugten Ausführungsform weist der Stellanschlag eine mit einem am Schaft vorgesehenen Gewindeabschnitt verschraubte Buchse auf.

In einer bevorzugten Ausführungsform ist das Zerspanungswerkzeug ein Senkwerkzeug mit einem mehrschneidigen Schneidkopf. Bei einem derartigen Werkzeug ist regelmäßig eine auf das Schleifen der Freiflächen zurückzuführende Schneidhöhendifferenz der Schneiden am Schneidkopf zu beobachten. Für die axiale Lageeinstellung des Tiefenanschlags am Schaft des Senkwerkzeugs wird von der in Werkzeugvorschubrichtung höchsten Schneide ausgegangen, die bei einer Senkbearbeitung zuerst in das Werkstück schneidet bzw. eintritt und daher die größte Senktiefe bzw. den größten Senkdurchmesser erzeugt. Für diese höchste Schneide wird der einem vorab definierten Solldurchmesser für die Senkbohrung entsprechende Radiuspunkt festgelegt. Axial auf Höhe dieses Radiuspunkts liegt dann die Nulllinie, auf die der Tiefenanschlag einzustellen ist. Hierzu wird über den Stellanschlag das den Tiefenanschlag tragende wenigstens eine Drehlager unter der Federvorspannung soweit in Richtung Schneidkopf verstellt, bis der Tiefenanschlag auf der oben erwähnten Nulllinie zum Liegen kommt. Dank der Federvorspannung wird bei der Einstellung des Tiefenanschlags das axiale Lagerspiel und/oder Montagespiel minimiert. Der Tiefenanschlag kann daher präzise auf die Nulllinie eingestellt werden, die für die höchste Schneide den vorgegebenen Solldurchmesser für die Senkung bestimmt.

Die Federvorspannung kann durch eine Druckfeder erreicht werden, die den Tiefenanschlag über das wenigstens eine Drehlager gegen den schaftseitigen Anschlag drückt. Zum Schneidkopf hin kann die Druckfeder beispielsweise unmittelbar an der Rückseite des Schneidkopfs abgestützt sein, was zu einer Reduzierung der zu montierenden Bauteile und einer Vereinfachung der Montage des Zerspanungswerkzeugs beiträgt. Alternativ dazu kann das Zerspanungswerkzeug einen vom Schneidkopf unabhängigen Federanschlag aufweisen, an dem die Druckfeder zum Schneidkopf hin abgestützt ist.

Des Weiteren kann die Druckfeder aus einem Tellerfederpaket gebildet sein, das auf dem Schaft sitzt. Über eine geeignete Zusammenstellung des Tellerfederpakets lässt sich in einfacher und zuverlässiger Weise eine stabile und auf das jeweils verwendete wenigstens eine Drehlager und die Montage abgestimmte Vorspannung erzielen.

Des Weiteren kann die Federvorspannung auf den von dem wenigstens einen Drehlager getragenen Tiefenanschlag, d.h. mittelbar auf das wenigstens eine Drehlager, oder aber unmittelbar auf das wenigstens eine Drehlager wirken. Beispielsweise kann die oben erwähnte Druckfeder an einem inneren Lagerring eines dem Schneidkopf nächstliegenden Drehlagers abgestützt sein.

Das wenigstens eine Drehlager und der schaftseitige Anschlag können beispielsweise über eine auf dem Schaft fixierte Buchse, d.h. mittelbar, oder aber unmittelbar auf dem Schaft angeordnet sein. Die unmittelbare Anordnung trägt zu einer Reduzierung der zu montierenden Bauteile und des damit einhergehenden Montagespiels und zu einer Vereinfachung der Montage des Tiefenanschlags auf den Schaft des Zerspanungswerkzeugs bei.

In einer bevorzugten Ausführungsform ist der Tiefenanschlag nach dem Vorbild der in der eingangs diskutierten DE 102014115768 B3 offenbarten Zerspanungswerkzeuge an einem das wenigstens eine Drehlager aufnehmenden Hülsenkörper ausgebildet. Der Hülsenkörper kann den Schneidkopf umgreifen.

In diesem Fall gelingt die anspruchsgemäße Federvorspannung des Tiefenanschlags über das wenigstens eine Drehlager gegen den schaftseitigen Anschlag auf einfache Weise dadurch, dass der Hülsenkörper in einer Richtung entgegengesetzt zur Werkzeugvorschubrichtung beispielsweise durch einen radial nach innen ragenden Ringvorsprung an dem wenigstens einen Drehlager abgestützt ist.

In einer möglichen Ausführungsform kann der Tiefenanschlag beispielsweise von genau einem Drehlager getragen sein. In diesem Fall können die Federvorspannung und die Anordnung des Drehlagers relativ zu dem Hülsenkörper und dem schaftseitigen Anschlag so konzipiert sein, dass, in einer Richtung entgegengesetzt zur Werkzeugvorschubrichtung gesehen, eine Federvorspannkraft in den Hülsenkörper eingeleitet wird, der Ringvorsprung des Hülsenkörpers gegen einen äußeren Lagerring des Drehlagers drückt, und ein innerer Lagerring des Drehlagers gegen den schaftseitigen Anschlag drückt.

In einer bevorzugten Ausführungsform wird der Tiefenanschlag jedoch von zwei Drehlagern getragen, die beidseitig des Ringvorsprungs angeordnet und daher durch den Ringvorsprung in einem axialen Abstand zueinander angeordnet sind. In diesem Fall können die Federvorspannung und die Anordnung der Drehlager relativ zum Hülsenkörper und schaftseitigen Anschlag so konzipiert sein, dass, in einer Richtung entgegengesetzt zur Werkzeugvorschubrichtung gesehen, eine Federvorspannkraft in einen inneren Lagerring des schneidkopfnahen Drehlagers eingeleitet wird, der äußere Lagerring des schneidkopfnahen Drehlagers gegen den Ringvorsprung des Hülsenkörpers drückt, der Ringvorsprung gegen den äußeren Lagerring des schneidkopffernen Drehlagers drückt, und der innere Lagerring des schneidkopffernen Drehlagers gegen den schaftseitigen Anschlag drückt.

In den oben diskutierten Ausführungsformen wird durch die Federvorspannung ein Lagerspiel und/oder Montagespiel minimiert.

Im Folgenden wird eine bevorzugte Ausführungsform eines erfindungsgemäßen Zerspanungswerkzeugs anhand einer schematischen Zeichnung erläutert.

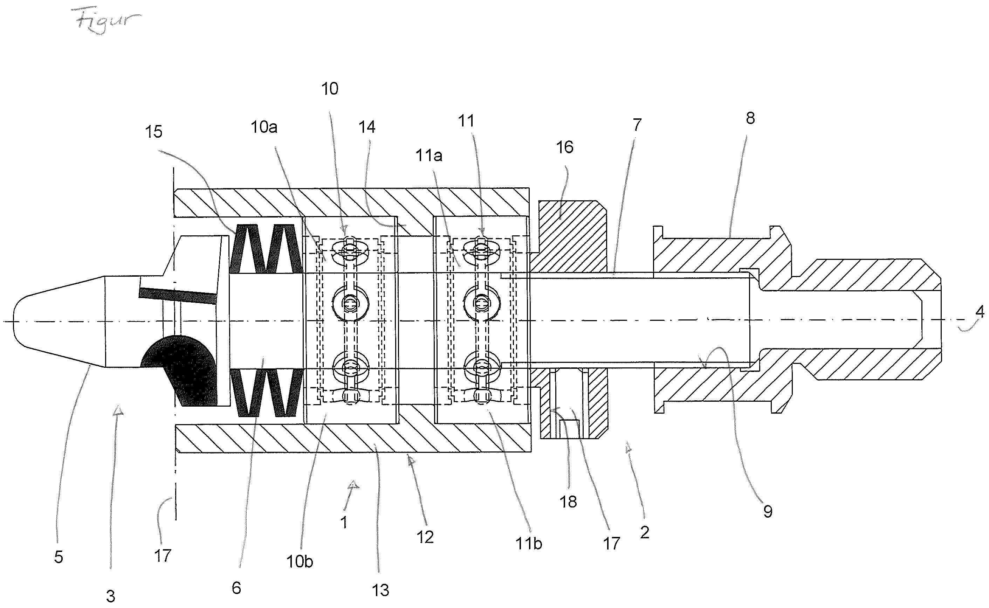

Die einzige Figur zeigt ein einen Tiefenanschlag tragendes Senkwerkzeug als Beispiel für ein erfindungsgemäßes Zerspanungswerkzeug.

Das in der Figur gezeigte Senkwerkzeug 1 hat einen Schaft 2 und einen an den Schaft 2 anschließenden Schneidkopf 3. Mit dem Bezugszeichen 4 ist die Drehachse angegeben. In der gezeigten Ausführungsform ist der Schneidkopf 3 mehrschneidig ausgebildet und hat einen Führungszapfen 5. In der gezeigten Ausführungsform ist der Schneidkopf 3 mit dem Schaft 2, im Besonderen mit einem Zylinderabschnitt 6 des Schafts 2, unlösbar verbunden. Der in der gezeigten Ausführungsform mehrteilig ausgeführte Schaft 2 weist neben dem bereits erwähnten Zylinderabschnitt 6, der den Schneidkopf 3 trägt, einen an den Zylinderabschnitt 6 anschließenden Gewindeabschnitt 7 auf. In der gezeigten Ausführungsform ist der Gewindeabschnitt 7 mit dem Zylinderabschnitt 6 unlösbar verbunden. In der gezeigten Ausführungsform sind der Schneidkopf 3 und der Schaft 2, im Besonderen der Zylinderabschnitt 6 und der Gewindeabschnitt 7, im Besonderen aus einem Stück gefertigt. Der Gewindeabschnitt 7 ist mit einem Kupplungsstück 8 zur Verbindung des Senkwerkzeugs 1 mit einer (nicht gezeigten) Werkzeugaufnahme oder dergleichen verschraubt. Wie es in der Figur gezeigt ist, ist der Gewindeabschnitt 7 hierzu in eine Gewindebohrung 9 des Kupplungsstücks 8 eingeschraubt.

Der Zylinderabschnitt 6 des Schafts 2 trägt über zwei Wälzlager 10, 11, die in der gezeigten Ausführungsform von Kugellagern gebildet sind, einen die Senktiefe begrenzenden Tiefenanschlag 12. Die inneren Lagerringe 10a, 11a der beiden Wälzlager 10, 11 sind auf dem Zylinderabschnitt 6 jeweils mit einer definierten Spielpassung axial verschiebbar angeordnet. Die äußeren Lagerringe 10b, 11b der beiden Wälzlager 10, 11 sind mit einem axialen Abstand zueinander mit einer definierten Presspassung in einem den Schneidkopf 3 umgreifenden Hülsenkörper 13 des Tiefenanschlags 12 aufgenommen. Hierzu weist der Hülsenkörper 13 einen radial nach innen ragenden Ringvorsprung 14 auf. Die beiden Wälzlager 10, 11 sind beidseits des Ringvorsprungs 14 an diesem axial abgestützt, wie es in der Figur gezeigt ist. Die axiale Länge des Ringvorsprungs 14 bestimmt daher den axialen Abstand der beiden Wälzlager 10, 11.

Eine zwischen der Schneidkopf 3 und dem schneidkopfnahen Wälzlager 10 angeordnete Druckfeder 15 erzeugt eine Federvorspannung, durch die der Tiefenanschlag 12 über die beiden Wälzlager 10, 11 vom Schneidkopf 3 weg gegen einen auf den Gewindeabschnitt 7 geschraubten Stellanschlag 16 vorgespannt wird. Wie es in der Figur gezeigt ist, ist die aus einem Tellerfederpaket gebildete Druckfeder 15 im Besonderen zwischen der Rückseite des Schneidkopfs 3 und dem inneren Lagerring 10a des schneidkopfnahen Wälzlagers 10 eingespannt. Des Weiteren steht der innere Lagerring 11a des schneidkopffernen Wälzlagers 11 an dem einem auf den Gewindeabschnitt 7 des Schafts 2 aufgeschraubten Stellanschlag 16 an. In der gezeigten Ausführungsform ist der Stellanschlag 16 aus einer auf den Gewindeabschnitt 7 geschraubten Rändelmutter gebildet. Nach erfolgter Lageeinstellung kann der Stellanschlag 16 mittels einer gegen den Gewindeabschnitt 7 drückenden Klemmschraube 17 fixiert werden, die in einer radial orientierten Gewindebohrung 18 des Stellanschlags 16 eingeschraubt ist.

In dem in der Figur gezeigten Zustand wird die Federkraft der Druckfeder 15 in den inneren Lagerring 10a des schneidkopfnahen Wälzlagers 10 eingeleitet und über den an dem Stellanschlag 16 anstehenden inneren Lagerring 11a des schneidkopffernen Lagerrings 11 an den Stellanschlag 16 weitergeleitet.

Durch die Federvorspannung wird eine Reduzierung eines axialen Lagerspiels in den beiden Wälzlagern 10, 11 und ein axiales Montagespiel zwischen dem Hülsenkörper 13 und den beiden Wälzlagern 10, 11 erreicht, wodurch eine spielfreie und präzise Positionierung und Lageeinstellung des Tiefenanschlags 12 in axialer Richtung ermöglicht ist.

In der gezeigten Ausführungsform wird der Tiefenanschlag 12 wie folgt positioniert. Die nicht näher gezeigten Schneiden am Schneidkopf 3 weisen bedingt durch das Schleifen der Freiflächen üblicherweise eine (in der Figur nicht gezeigte) Schneidhöhendifferenz auf. Für die axiale Lageeinstellung des Tiefenanschlags 12 wird nun von einer in Werkzeugvorschubrichtung höchsten Schneide ausgegangen, die bei einer Senkbearbeitung zuerst in ein Werkstück schneidet bzw. eintritt und daher die größte Senktiefe bzw. den größten Senkdurchmesser erzeugt. Für diese höchste Schneide wird der einem vorab definierten Solldurchmesser für die Senkbohrung entsprechende Radiuspunkt festgelegt. Axial auf Höhe dieses Radiuspunkts liegt dann eine in der Figur gestrichelt angedeutete Nulllinie 17, auf die der Tiefenanschlag 12 einzustellen ist. Hierzu werden über den Stellanschlag 12 die den Tiefenanschlag 12 tragenden Wälzlager 10, 11 gegen bzw. unter der Federvorspannung soweit in Richtung Schneidkopf 3 verstellt, bis der Tiefenanschlag 12 auf der oben erwähnten Nulllinie 17 zum Liegen kommt. Dank der Federvorspannung wird bei der Einstellung des Tiefenanschlags 12 ein axiales Lagerspiel und/oder Montagespiel minimiert. Der Tiefenanschlag 12 kann daher präzise auf eine für die jeweilige Senkbearbeitung festgelegte Nulllinie 17 eingestellt werden, die für die höchste Schneide den vorgegebenen Solldurchmesser für die Senkung bestimmt.

Selbstverständlich ergeben sich für den Fachmann aus den sich aus den Ansprüchen ergebenden Merkmalskombinationen sowie der Würdigung der Ansprüche verschiedene Abwandlungen zu der in der Figur gezeigten Ausführungsform.

So ist das erfindungsgemäße Zerspanungswerkzeug nicht auf ein Senkwerkzeug beschränkt. Es kann auch beispielsweise ein Bohr- oder Fräswerkzeug sein. Der jeweils vorhandene Schneidkopf kann ein- oder mehrschneidig ausgebildet sein.

Abweichend von der gezeigten Ausführungsform, in der der Schneidkopf mit dem Schaft aus einem Stück gefertigt ist, können der Schneidkopf und der Schaft separat, z.B. aus verschiedenen Materialien (beispielsweise den Schneidkopf aus einem härteren Material und den Schneidkopf aus einem weicheren Material), gefertigt und dann durch einen Stoffschluss, z.B. durch Verlöten, unlösbar miteinander verbunden sein. Alternativ zu der unlösbaren Verbindung des Schneidkopfs mit dem Schaft kann der Schneidkopf durch einen Form- und/oder Kraftschluss mit dem Schaft auch lösbar, d.h. austauschbar, verbunden sein. Neben der Austauschbarkeit bietet auch diese Alternative die Möglichkeit, den Schneidkopf und den Schaft aus verschiedenen Materialien zu fertigen und zu kombinieren.

Des Weiteren kann der Schaft durchwegs zylindrisch ausgebildet sein. Der schaftseitige Anschlag könnte in diesem Fall von einer auf dem zylindrischen Schaft axial verschiebbaren Buchse gebildet sein, die mittels einer Klemmschraube am Schaft axial fixierbar ist. Insbesondere in diesem Fall kann der zylindrische Schaft ohne Zwischenschaltung des in der obigen Ausführungsform vorgesehenen Kupplungsstücks direkt in eine Werkzeugaufnahme (Spannfutter) oder dergleichen eingespannt werden.

Für die drehbewegliche Lagerung des Tiefenanschlags genügt grundsätzlich wenigstens ein Drehlager, das den Tiefenanschlag trägt. Das Drehlager kann wie in der gezeigten Ausführungsform aus einem Wälzlager, im Besonderen Kugellager, gebildet sein. Das ist aber nicht zwingend notwendig. Statt eines Wälzlagers könnte auch ein Gleitlager sowie eine Kombination verschiedener Lagertypen verwendet werden.

Vorteilhaft ist der Tiefenanschlag wie in der gezeigten Ausführungsform axial verstellbar. Auch das ist aber nicht zwingend notwendig. Der Tiefenanschlag kann beispielsweise axial unveränderlich am Schaft festgelegt sein.

Eine auf den Tiefenanschlag ausgeübte Federvorspannung kann wie in der gezeigten Ausführungsform über eine zwischen dem Schneidkopf und dem Tiefenanschlag angeordnete Druckfeder erzeugt werden. Grundsätzlich wäre es möglich statt einer Druckfeder eine Zugfeder zu verwenden, die den Tiefenanschlag axial vom Schneidkopf weg gegen einen schaftseitigen Anschlag zieht.

Zur Erzeugung der Federvorspannung kann statt eines Tellerfederpakets grundsätzlich auch eine Schraubenfeder bzw. Schraubenfederanordnung verwendet werden.

Abweichend von der gezeigten Ausführungsform, in die beiden Wälzlager und der schaftseitige unmittelbar auf dem Schaft sitzen, könnten die Wälzlager und der schaftseitige Anschlag etwa nach dem Vorbild der DE 1020141157687 B3 auch beispielsweise über eine auf dem Schaft fixierte Buchse, d.h. mittelbar, auf dem Schaft angeordnet sein.

## Patentansprüche

1. Zerspanungswerkzeug (1) mit einem Schaft (2) und einem Schneidkopf (3), wobei der Schaft (2) über wenigstens ein Drehlager (10, 11) einen die Eindringtiefe in ein Werkstück begrenzenden Tiefenanschlag (12) trägt, wobei
der Tiefenanschlag (12) über das wenigstens eine Drehlager (10, 11) vom Schneidkopf (3) weg gegen einen schaftseitigen Anschlag (16) federvorgespannt ist,
das wenigstens eine Drehlager (10, 11) axial verschiebbar ist, und der schaftseitige Anschlag (16) aus einem axial verstellbaren Stellanschlag gebildet ist, **dadurch gekennzeichnet, dass**
der Stellanschlag aus einer auf dem Schaft (2) lageeinstellbar angeordneten Buchse gebildet ist.

2. Zerspanungswerkzeug (1) nach Anspruch 1, **gekennzeichnet durch** eine zwischen dem Schneidkopf (3) und dem wenigstens einen Drehlager (10, 11) angeordnete Druckfeder (15).

3. Zerspanungswerkzeug (1) nach Anspruch 2, **dadurch gekennzeichnet, dass** die Druckfeder (15) am Schneidkopf (3) abgestützt ist.

4. Zerspanungswerkzeug (1) nach Anspruch 2 oder 3, **dadurch gekennzeichnet, dass** die Druckfeder (15) aus einem Tellerfederpaket gebildet ist.

5. Zerspanungswerkzeug (1) nach einem der Ansprüche 1 bis 4, **dadurch gekennzeichnet, dass** der Tiefenanschlag (12) an einem das wenigstens eine Drehlager (10, 11) aufnehmenden Hülsenkörper (13) ausgebildet ist.

6. Zerspanungswerkzeug (1) nach Anspruch 5, **dadurch gekennzeichnet, dass** das wenigstens eine Drehlager (10, 11) axial an einem radial nach innen ragenden Ringvorsprung (14) des Hülsenkörpers (13) abgestützt ist.

7. Zerspanungswerkzeug (1) nach Anspruch 6, **gekennzeichnet durch** zwei Drehlager (10, 11), die beidseits des Ringvorsprungs (14) angeordnet sind.

8. Zerspanungswerkzeug (1) nach einem der Ansprüche 1 bis 7, **dadurch gekennzeichnet, dass** das wenigstens eine Drehlager (10, 11) aus einem Wälzlager gebildet ist.

9. Zerspanungswerkzeug (1) nach einem der Ansprüche 1 bis 8, **dadurch gekennzeichnet, dass** das wenigstens eine Drehlager (10, 11) und der schaftseitige Anschlag (16) unmittelbar auf dem Schaft (2) sitzen.

## Claims

1. A cutting tool (1) having a shank (2) and a cutting head (3), wherein the shank (2) carries a depth stop (12), which limits the penetration depth into a workpiece, via at least one pivot bearing (10, 11), wherein
the depth stop (12) is spring-loaded away from the cutting head (3), via the at least one pivot bearing (10, 11), against a shank-side stop (16),
the at least one pivot bearing (10, 11) is axially displaceable, and the shank-side stop (16) is formed from an axially adjustable setting stop (16),
**characterized in that**
the setting stop (16) is formed from a bushing, which is arranged on the shank (2) so that the position can be set.

2. The cutting tool (1) according to claim 1, **characterized by** a compression spring (15) arranged between the cutting head (3) and the at least one pivot bearing (10, 11).

3. The cutting tool (1) according to claim 2, **characterized in that** the compression spring (15) is supported on the cutting head (3).

4. The cutting tool (1) according claim 2 or 3, **characterized in that** the compression spring (15) is formed from a disk spring unit.

5. The cutting tool (1) according to any of claims 1 to 4, **characterized in that** the depth stop (12) is formed at a sleeve body (13), which receives the at least one pivot bearing (10, 11).

6. The cutting tool (1) according to claim 5, **characterized in that** the at least one pivot bearing (10, 11) is axially supported on an annular projection (14) of the sleeve body (13) projecting radially to the inside.

7. The cutting tool (1) according to claim 6, **characterized by** two pivot bearings (10, 11), which are arranged on both sides of the annular projection (14).

8. The cutting tool (1) according to any of claims 1 to 7, **characterized in that** the at least one pivot bearing (10, 11) is formed from a rolling bearing.

9. The cutting tool (1) according to any of claims 1 to 8, **characterized in that** the at least one pivot bearing (10, 11) and the shank-side stop (16) sit directly on the shank (2).

## Revendications

1. Outil d'usinage par enlèvement de copeaux (1) avec une tige (2) et une tête de coupe (3), dans lequel la tige (2) porte une butée de profondeur (12) limitant la profondeur d'enfoncement dans une pièce à usiner par le biais d'au moins un palier rotatif (10, 11), dans lequel
la butée de profondeur (12) est précontrainte par ressort par le biais de l'au moins un palier rotatif (10, 11) loin de la tête de coupe (3) contre une butée (16) côté tige,
l'au moins un palier rotatif (10, 11) est mobile axialement et la butée (16) côté tige est formée à partir d'une butée de réglage réglable axialement, **caractérisé en ce que**
la butée de réglage est formée à partir d'une douille agencée en position réglable sur la tige (2).

2. Outil d'usinage par enlèvement de copeaux (1) selon la revendication 1, **caractérisé par** un ressort de compression (15) agencé entre la tête de coupe (3) et l'au moins un palier rotatif (10, 11).

3. Outil d'usinage par enlèvement de copeaux (1) selon la revendication 2, **caractérisé en ce que** le ressort de compression (15) est en appui contre la tête de coupe (3).

4. Outil d'usinage par enlèvement de copeaux (1) selon la revendication 2 ou 3, **caractérisé en ce que** le ressort de compression (15) est formé à partir d'un bloc de rondelles-ressorts.

5. Outil d'usinage par enlèvement de copeaux (1) selon l'une quelconque des revendications 1 à 4, **caractérisé en ce que** la butée de profondeur (12) est formée au niveau d'un corps de manchon (13) recevant l'au moins un palier rotatif (10, 11).

6. Outil d'usinage par enlèvement de copeaux (1) selon la revendication 5, **caractérisé en ce que** l'au moins un palier rotatif (10, 11) est en appui axialement contre une saillie annulaire (14) dépassant radialement vers l'intérieur du corps de manchon (13).

7. Outil d'usinage par enlèvement de copeaux (1) selon la revendication 6, **caractérisé par** deux paliers rotatifs (10, 11) qui sont agencés de part et d'autre de la saillie annulaire (14).

8. Outil d'usinage par enlèvement de copeaux (1) selon l'une quelconque des revendications 1 à 7, **caractérisé en ce que** l'au moins un palier rotatif (10, 11) est formé à partir d'un palier à roulement.

9. Outil d'usinage par enlèvement de copeaux (1) selon l'une quelconque des revendications 1 à 8, **caractérisé en ce que** l'au moins un palier rotatif (10, 11) et la butée (16) côté tige logent directement sur la tige (2).
